# EUROPEAN PATENT APPLICATION

(11) **EP 4 661 125 A1**
(43) Date of publication of application: **10.12.2025**
(21) Application number: 24865937.7
(22) Date of filing: 11.09.2024
(51) Int. Cl.: H01M 10/04, H01M 4/04, H01M 50/531, B65H 23/24, B65H 23/26

(54) **ELECTRODE TRANSFER SYSTEM**

(30) Priority: 12.09.2023 KR 20230121373
(71) Applicant: LG Energy Solution, Ltd., Seoul 07335 (KR)
(72) Inventor: PARK, Myung Chan, Daejeon 34122 (KR); KO, Seong Beom, Daejeon 34122 (KR); LEE, Chan Yang, Daejeon 34122 (KR)
(74) Representative: Plasseraud IP
(86) International application number: PCT/KR2024/096134
(87) International publication number: WO 2025/058498

(57) **Abstract**

Disclosed herein relates to an electrode transfer system for transferring electrode sheets that include electrode tabs formed at predetermined spacings on one side, including: a guide roller configured to rotate along a transfer direction of the electrode sheet and supporting the electrode sheet; and a tab guide unit configured to blow air or suck air toward opposing electrode sheets on the guide roller, wherein the tab guide unit includes: a guide member including at least one hole formed to allow air to flow in and out, and extending along a curved surface of the guide roller; and a pump unit connected to the hole to be in communication and to provide a suction force and a jet force to the guide member.

## Description

### [Technical Field]

The present disclosure relates to an electrode transfer system, and more particularly to an electrode transfer system capable of suppressing folding and migration of electrode tabs during transfer.

This application claims the benefit of priority from Korean Patent Application No. 10-2023-0121373, filed on Sep. 12, 2023, the disclosure of which is incorporated herein by reference.

### [Background]

Secondary batteries are gaining a lot of attention as an energy source for a wide range of products, including mobile devices and electric vehicles. As a viable energy source that can replace the use of conventional products that use fossil fuels, these secondary batteries are gaining spotlight as a green energy source because they produce no byproducts of energy use.

Based on the shape of the battery case, secondary batteries are classified into cylindrical or prismatic batteries, where a jelly-roll is embedded in a cylindrical or prismatic metal can, and pouch-type batteries, where a jelly-roll is embedded in a pouch-type case of aluminum laminated sheet.

The secondary battery specifically comprises an electrode assembly, electrode leads and a case. Taking a pouch-type cell as an example, the secondary battery is composed of an electrode assembly having alternately laminated electrodes and a separator, an electrode lead electrically connected to the electrode assembly, and a pouch-typed case surrounding the electrode assembly such that the electrode lead protrudes outward.

The electrode comprises an electrode sheet of a metal material coated with an electrode material, wherein one side of the electrode sheet has electrode tabs that are connected to the electrode leads and are drawn out at a certain spacing.

The thickness of the electrode tabs is processed to a very small thickness, which can often cause the electrode sheet to fold or break during transfer.

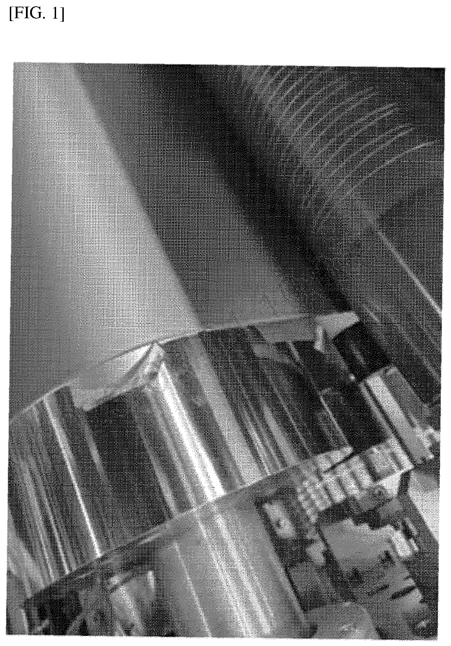

FIG. 1 illustrates an electrode tab defect during an actual electrode production process.

Since the secondary battery with the folded electrode tabs as shown in FIG. 1 will be determined as a defect, the defective electrode tabs are directly responsible for the low manufacturing yield of the secondary battery. If the defective electrode tabs are used as assembly parts, the defective electrode tabs will also cause other normal parts to be unusable. This causes huge economic losses, so the defective electrode tabs must be screened and removed from the process from time to time.

Therefore, during the electrode manufacturing process, the operator is responsible for detecting the above-mentioned electrode tab folds or migrations, but there are practical difficulties for the operator to detect all defective electrode tabs.

### [Related art document]

China Registered Patent No. 218731172

### [Summary]

### [Technical Problem]

Accordingly, the present disclosure was invented to solve the above problems, and aims to provide an electrode transfer system that can prevent damage to electrode tabs by suppressing folding and migration phenomena of electrode tabs during transfer.

Other objects and advantages of the present disclosure will be understood from the following description, and will become more apparent from the embodiments of the present disclosure. It will also be readily apparent that the objects and advantages of the present disclosure may be realized by the means and combinations thereof disclosed in the patent claims.

### [Technical Solution]

According to the present disclosure, there is provided an electrode transfer system for transferring electrode sheets that include electrode tabs formed at predetermined spacings on one side.

An electrode transfer system includes: a guide roller configured to rotate along a transfer direction of the electrode sheet and supporting the electrode sheet; and a tab guide unit configured to blow air or suck air toward opposing electrode sheets on the guide roller, wherein the tab guide unit includes: a guide member including at least one hole formed to allow air to flow in and out, and extending along a curved surface of the guide roller; and a pump unit connected to the hole to be in communication and to provide a suction force and a jet force to the guide member.

The pump unit includes: a jet pump for blowing air; and a suction pump for sucking in air, wherein the hole communicating with the jet pump may be configured to blow air toward the electrode sheet, and the hole communicating with the suction pump may be configured to suck in air toward the electrode sheet.

The tab guide unit may be further provided with a power switch to operate the pump unit on the guide member.

The hole may include: a jet hole in communication with the jet pump; and a suction hole in communication with the suction pump.

A diameter of the suction hole and a diameter of the jet hole may be different.

A diameter of the suction hole may be substantially the same as a diameter of the jet hole.

The guide member includes a guide surface opposed to the guide roller, wherein the hole may be formed in the guide surface.

The jet hole and the suction hole may be intermixed and disposed on the guide surface.

The guide surface includes a jet part having at least one jet hole that is closely concentrated and a suction part having at least one suction hole that is closely concentrated, wherein the jet part and the suction part may be alternately located along a longitudinal or width direction of the guide member.

The guide surface may include an arc part corresponding to a curved surface of the guide roller.

The hole may have any shape among a point and a straight line.

In the hole having a shape of the straight line, the hole may extend along a longitudinal or width direction of the guide member.

The guide member may be rotatable about a rotation axis of the guide roller in an arc along a curved surface of the guide roller.

The guide member may be disposed in a position corresponding to the electrode tab of the electrode sheet supported on the guide roller.

The guide member may further include a regulating valve for regulating an amount of opening in the hole to regulate an amount of the air flowing in and out of the hole.

### [Advantageous Effects]

According to the present disclosure, the phenomenon of electrode tab folding can be effectively prevented.

Furthermore, according to the present disclosure, the phenomenon of electrode migration can be effectively prevented.

Furthermore, the present disclosure can effectively prevent the production yield of secondary batteries from being reduced due to defective electrode tabs.

### [Brief Description of the Drawings]

FIG. 1 is a photograph of an electrode tab defect during a conventional electrode production process.
FIG. 2 is a schematic drawing of an electrode transfer system according to a first embodiment of the present disclosure.
FIG. 3 is a perspective view of the most important part of a guide roller and a guide member included in the tab guide unit.
FIG. 4 is a simplified schematic view of a side surface of the guide roller and guide member of FIG. 3.
FIG. 5 is a perspective view of the guide member with the top and bottom inverted.
FIG. 6 is a plan view of the guide surface of the guide member of FIG. 5.
FIG. 7 is a plan view of a guide surface of a guide member according to one embodiment.
FIG. 8 is a perspective view of a guide surface of a guide member according to another embodiment.
FIG. 9 is a side view of a guide member according to one embodiment, with an internal air passage represented by a hidden line.
FIG. 10 is a rear perspective view of a guide member according to one embodiment.
FIG. 11 is a rear perspective view of a guide member according to another embodiment of the present disclosure.
FIG. 12 is a simplified schematic illustration of the process of correcting the electrode tab structure through the movement of air against the defective part of the electrode tab where folding has occurred.
FIG. 13 is a simplified schematic illustration of the process of correcting the electrode tab structure through the movement of air against the defective part of the electrode tab where migration has occurred.
FIG. 14 is a plan view of a guide surface of a guide member included in a second embodiment of an electrode transfer system having a mixture of suction and jet holes.
FIG. 15 is a plan view of a guide surface of a guide member included in a third embodiment of an electrode transfer system, having compartmentalized jet and suction parts.
FIG. 16 is a plan view of a guide surface of a guide member included in a fourth embodiment of an electrode transfer system, wherein the jet and suction parts are disposed alternately along a longitudinal direction of the guide member.
FIG. 17 is a plan view of a guide surface of a guide member included in an electrode transfer system according to a fifth embodiment in which the holes are in a straight-line shape.
FIG. 18 is a plan view of a guide surface of a guide member included in an electrode transfer system according to a sixth embodiment in which the holes are in a straight-line shape.
FIG. 19 is a plan view of a guide surface of a guide member included in an electrode transfer system according to a seventh embodiment in which the holes are in a straight-line shape.

### [Best Mode for Carrying out the Disclosure]

Hereinafter, preferred embodiments of the present disclosure will be described in detail with reference to the accompanying drawings. Prior to this, it should be noted that the terms or words used in this specification and the claims are not to be construed in their ordinary or dictionary sense, but rather in a sense and concept consistent with the technical idea of the disclosure, based on the principle that the inventor may properly define the concept of a term to best describe his/her disclosure.

Accordingly, it is to be understood that the embodiments described herein and the configurations illustrated in the drawings are only the most preferred embodiments of the disclosure and are not intended to be exhaustive of the technical ideas of the disclosure, and that there may be various equivalents and modifications that may be substituted for them at the time of filing.

Furthermore, in describing the disclosure, specific descriptions of related known configurations or features are omitted where it is determined that such detailed descriptions would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

Hereinafter, specific embodiments of the electrode transfer system of the present disclosure will be described in detail with reference to the accompanying drawings. As used in the following description, relative positioning designations such as front to rear or upper, lower, left, and right are intended to aid in understanding the disclosure and refer to the orientation shown in the drawings unless otherwise defined.

The present disclosure relates to an electrode transfer system 1 for transferring an electrode sheet S including electrode tabs T formed at predetermined spacings on one side, by which the folding and migration phenomena of the electrode tabs T during transfer can be suppressed.

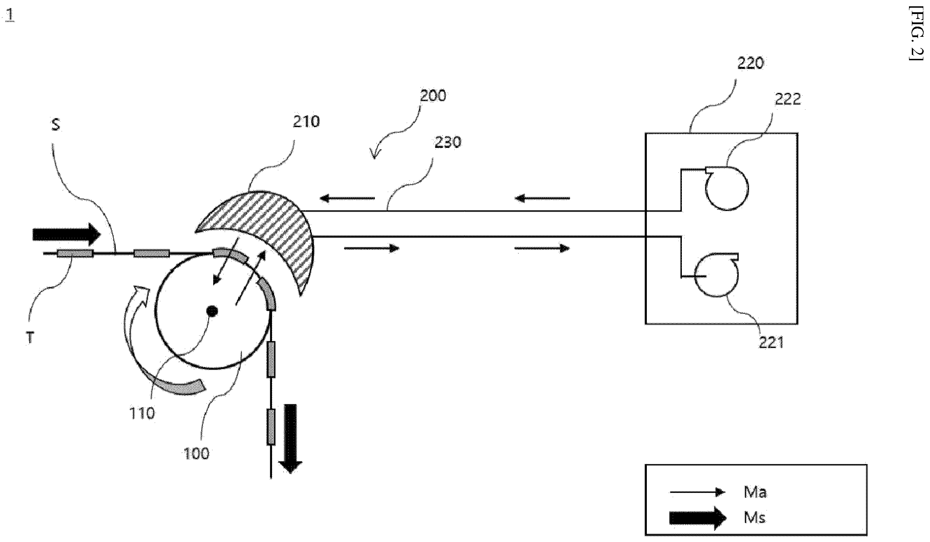

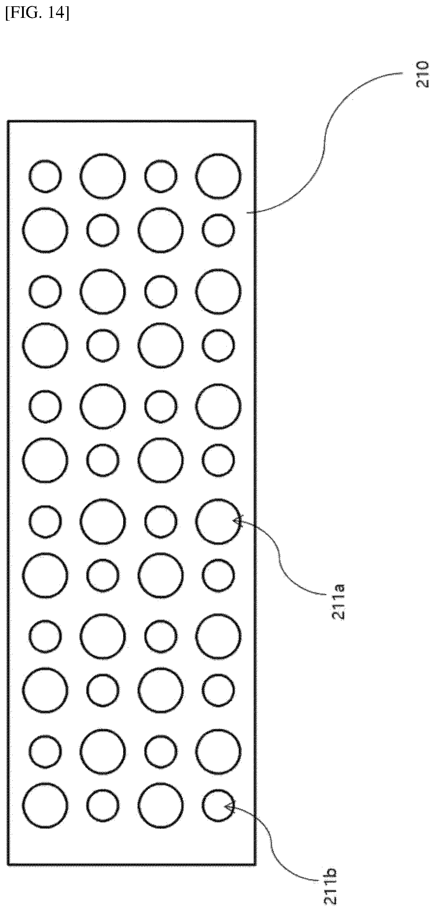

FIGS. 2 through 13 relate to an electrode transfer system 1 according to a first embodiment of the present disclosure, and FIGS. 14 through 19 relate to an electrode transfer system 1 according to a second through seventh embodiment of the present disclosure, respectively.

Hereinafter, the electrode transfer system 1 of the present disclosure will be described with reference to the respective drawings.

Here, the longitudinal direction of the guide roller 100 refers to a direction extending the rotation axis 110 on both sides, the longitudinal direction of the guide member 210 refers to a direction corresponding to the rotation direction of the guide roller 100, and the width direction of the guide member 210 refers to a direction corresponding to the longitudinal direction of the guide roller 100.

### (First embodiment)

FIG. 2 is a schematic drawing of an electrode transfer system 1 according to the first embodiment of the present disclosure.

The electrode transfer system 1 includes a guide roller 100 that rotates to support the electrode sheet S and is positioned adjacent to the guide roller 100 to guide the electrode tabs T of the electrode sheet S supported on the guide roller 100, and a tab guide unit 200 that blows or sucks air toward the electrode tabs T.

The tab guide unit 200 includes a guide member 210 and a pump unit 220, as shown in FIG. 2.

The electrode sheet S includes a sheet including any one of copper and aluminum, and an electrode material coated on the sheet.

The electrode material may include an electrode active material and a binder resin, and may further include additives such as a conductive agent as desired.

The electrode active material may be a positive electrode active material used for the positive electrode of the secondary battery or a negative electrode active material used for the negative electrode of the secondary battery.

The positive electrode active material may include a lithium-containing transition metal oxide, and the negative electrode active material may include a lithium metal, a carbon material, and a metal compound, or a mixture thereof, from which lithium ions can be adsorbed and released.

The electrode sheet S includes an electrode part coated with an electrode material and a non-coated part without an electrode material coated.

The electrode part of the electrode sheet S is located in the center of the electrode sheet S, and the non-coated part is located at both edge parts of the electrode sheet S.

A plurality of electrode tabs T is formed at certain spacing at the ends of any one of the non-coated parts located on both sides of the electrode sheet S.

The guide roller 100 is configured to rotate along the transfer direction of the electrode sheet S to support the electrode sheet S, and serves to redirect the transfer direction of the supported electrode sheet S. In other words, the guide roller 100 can redirect the transfer direction of the electrode sheet S by causing the electrode sheet S to span the periphery of the curved surface shape. At this time, the degree of direction switching may be determined according to the degree of spanning of the electrode sheet S.

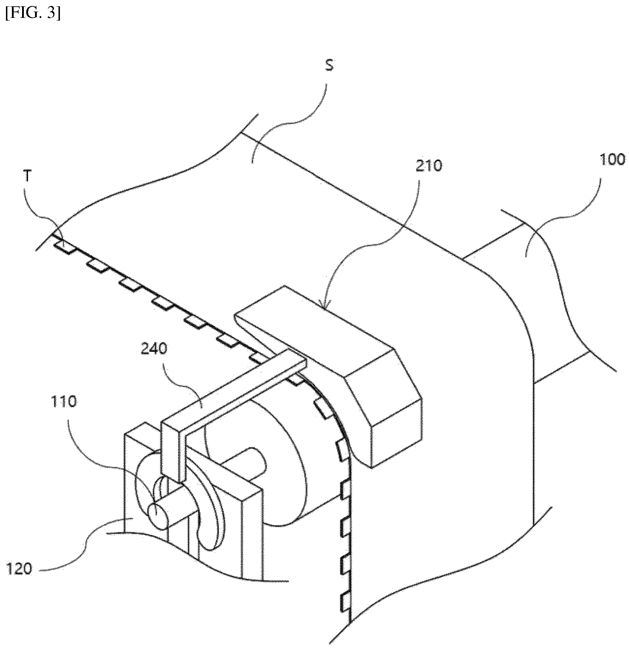

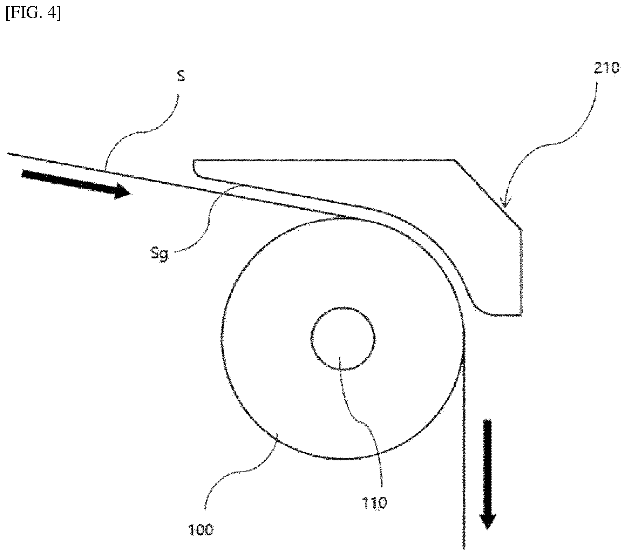

FIG. 3 is a perspective view of the most important part of the guide roller 100 of a guide member 210 included in the tab guide unit 200, and FIG. 4 is a simplified schematic view of a side surface of the guide roller 100 and guide member 210 of FIG. 3.

The guide roller 100 has a columnar shape, as shown in FIG. 3, and rotates about a rotation axis 110.

The guide roller 100 may be rotated by being coupled to allow the rotation axis 110 to rotate about the roller support 120 provided on both sides.

In some embodiments, the rotation axis 110 and the roller support 120 may be bearing coupled to allow the guide roller 100 to rotate smoothly.

In some embodiments, the guide roller 100 may be passively rotated by the electrode sheet S.

In some embodiments, the guide roller 100 may be actively rotated via a separate power source.

The tab guide unit 200 includes a guide member 210 and a pump unit 220.

The guide member 210 is disposed in a position corresponding to the guide roller 100 to guide the electrode tabs T of the electrode sheet S supported on the guide roller 100.

The guide member 210 is disposed in a position corresponding to the electrode tabs T of the electrode sheet S so as to effectively guide the electrode tabs T as shown in FIG. 3.

In some embodiments, the guide member 210 may be coupled to be able to rotate about the roller support 120 that supports the guide roller 100. Specifically, the guide member 210 may be rotatable about the rotation axis 110 of the guide roller 100 in an arc along a curved surface of the guide roller 100.

In some embodiments, a side part of the guide member 210 may be coupled to a connecting support 240 extending from the roller support 120 to the guide member 210.

In some embodiments, the opposite end of the connecting support 240 that is not coupled to the guide member 210 may be coupled to one side of the roller support 120 such that it is rotatable about the rotation axis 110 of the roller support 120. Thus, the guide member 210 is rotated in an arc along the curved surface of the guide roller 100 about the rotation axis 110 of the roller support 120 as the connecting support 240 is rotated relative to the roller support 120.

However, the shape of the connecting support 240 need not be limited to that shown in FIG. 3, and the connecting support 240 may have any shape that allows the guide member 210 to rotate about the rotation axis 110 of the guide roller 100.

The guide member 210 includes a guide surface Sg opposing the guide roller 100 or an electrode sheet S supported on the guide roller 100.

The guide surface Sg may be formed to include an arc part of an arc shape corresponding to the curved shape of the surface of the guide roller 100 as shown in FIG. 4.

The guide surface Sg prevents the electrode tabs T formed on one side from bending or warping while the electrode sheet S is bent across the guide roller 100.

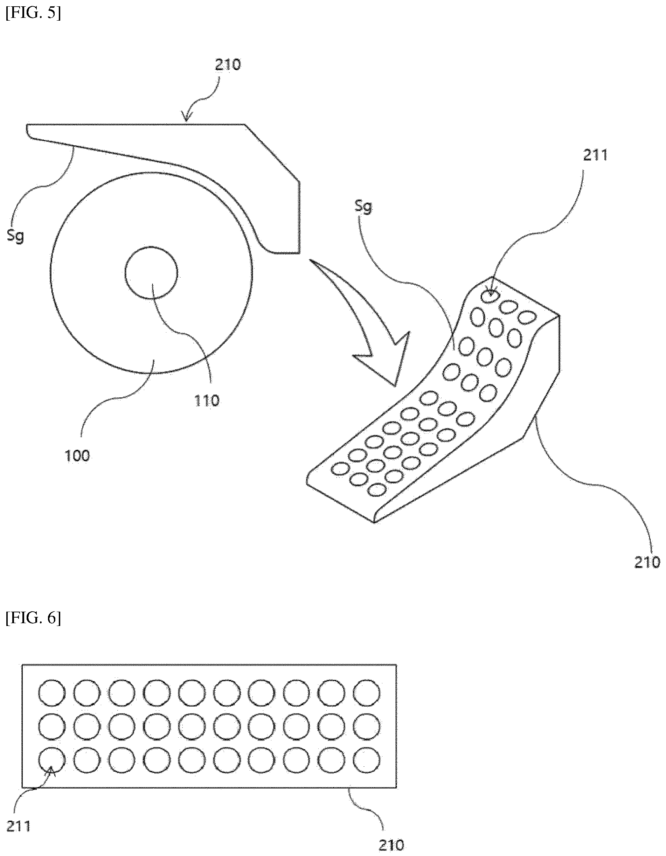

FIG. 5 is a perspective view of the guide member 210 with the top and bottom inverted, and FIG. 6 is a plan view of the guide surface Sg of the guide member 210 of FIG. 5.

Referring to FIGS. 5 and 6, the guide member 210 includes at least one hole 211 formed to allow air to flow in and out.

In some embodiments, each of the holes 211 may be designed to have a different shape and diameter. Alternatively, in other embodiments, each of the holes 211 may be designed to be substantially all the same in shape and diameter.

The hole 211 is formed in the guide surface Sg of the guide member 210 as shown in FIG. 5.

In some embodiments, the holes 211 may have a point shape. More specifically, the holes 211 may have shapes such as circular, elliptical, and polygonal.

The plurality of holes 211 may be spaced apart and aligned at a predetermined distance along a longitudinal and/or width direction of the guide member 210, as shown in FIG. 6.

The pump unit 220 serves to provide a suction force and a jet force of air to the guide member 210, as illustrated briefly in FIG. 2. That is, the pump unit 220 is connected to be in communication with a hole 211 of the guide member 210 to provide a suction force and a jet force to the guide member 210.

The pump unit 220 and the guide member 210 are connected via a hollow pipe 230, such as a hose or the like, and air pressure generated by the pump unit 220 is transmitted to the guide member 210 via the interior of the pipe 230.

The pump unit 220 includes a jet pump 222 for blowing air and a suction pump 221 for sucking air.

In some embodiments, one jet pump 222 may be in communication with any one hole 211, or may be in communication with a plurality of holes 211 simultaneously.

In some embodiments, one suction pump 221 may be in communication with any one of the holes 211.

In some embodiments, one suction pump 221 may be in communication with a plurality of holes 211 simultaneously.

The holes 211 in communication with the jet pump 222 blow air toward the electrode sheet S when the jet pump 222 is operated. More specifically, the hole 211 in communication with the jet pump 222 blows air toward the electrode tabs T included in the electrode sheet S.

The holes 211 in communication with the suction pump 221 suck air from a direction facing the electrode sheet S when the suction pump 221 is operated. More specifically, the hole 211 in communication with the suction pump 221 sucks air from a direction facing the electrode tabs T included in the electrode sheet S.

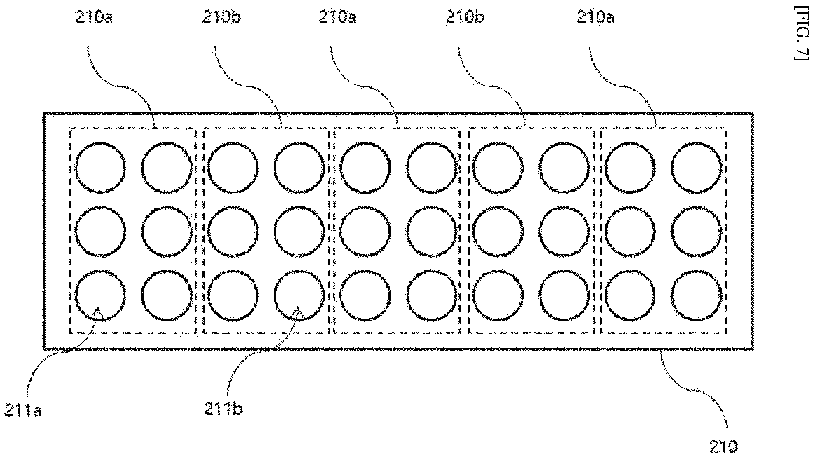

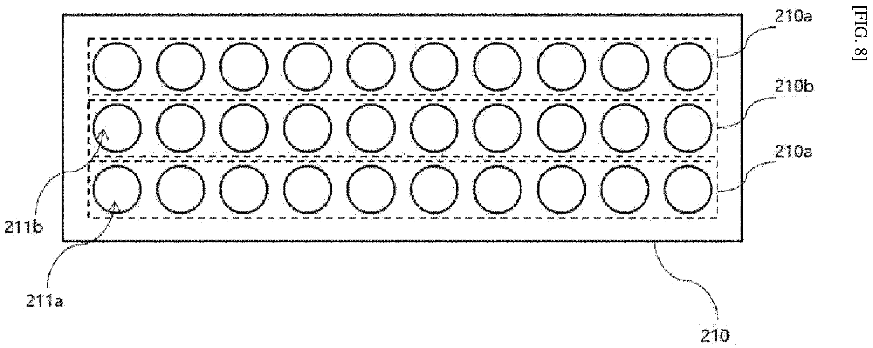

FIG. 7 is a plan view of a guide surface Sg of a guide member 210 according to one embodiment, and FIG. 8 is a plan view of a guide surface Sg of a guide member 210 according to another embodiment.

Referring to FIGS. 7 and 8, the holes 211 included in the guide member 210 include a jet hole 211b in communication with the jet pump 222 and a suction hole 211a in communication with the suction pump 221.

In some embodiments, the jet hole 211b and the suction hole 211a may be of the same shape with the same diameter as each other.

The jet holes 211b and suction holes 211a may be irregularly intermixed and disposed on the guide surface Sg, or holes 211 performing the same function may be closely concentrated.

When divided by closely concentrating holes 211 performing the same function, the guide surface Sg includes a jet part 210b with at least one jet hole 211b closely concentrated and a suction part 210a with at least one suction hole 211a closely concentrated.

Referring to FIG. 7, six suction holes 211a are closely concentrated to form a 2X3 rectangle to form one suction part 210a, and six jet holes 211b are closely concentrated to form a 2X3 rectangle to form one jet part 210b. The suction part 210a and the jet part 210b are alternately disposed along the longitudinal direction of the guide member 210.

Referring to FIG. 8, ten suction holes 211a are aligned along the direction of travel of the electrode tab T to form one suction part 210a, and ten jet holes 211b are aligned along the direction of travel of the electrode tab T to form one jet part 210b. The suction part 210a and the jet part 210b are disposed alternately along the width direction of the guide member 210.

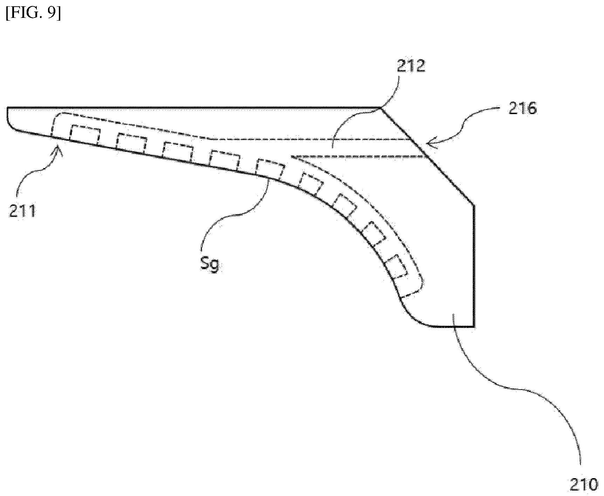

FIG. 9 is a side view of the guide member 210 according to one embodiment with the internal air passages 212 represented by hidden lines.

Referring to FIG. 9, the guide member 210 includes an air passage 212 in communication with the holes 211 therein, each of the holes 211 being in communication with a pump unit 220 via the air passage 212.

Referring to FIG. 9, an open connecting hole 216 is formed in one side of the guide member 210, and each hole 211 is connected to the connecting hole 216 via an air passage 212. More specifically, the air passages 212 extending from each of the holes 211 converge to extend to a single connecting hole 216.

The one guide member 210 includes at least two connecting holes 216. The at least one connecting hole 216 is in communication with the suction hole 211a and the suction pump 221, and the other connecting hole 216 is in communication with the jet hole 211b and the jet pump 222.

The connecting hole 216 is a part that directly connects with the pipe 230 connected with the pump unit 220, and the connecting hole 216 and the pipe 230 can be coupled and fixed using the fitting member 213 or the like as needed.

The fitting member 213 is a generic mechanism used to connect the pipe 230, such as a pipe or hose, for coupling to another structure, and the specific features of the fitting member 213 are not discussed in the present disclosure.

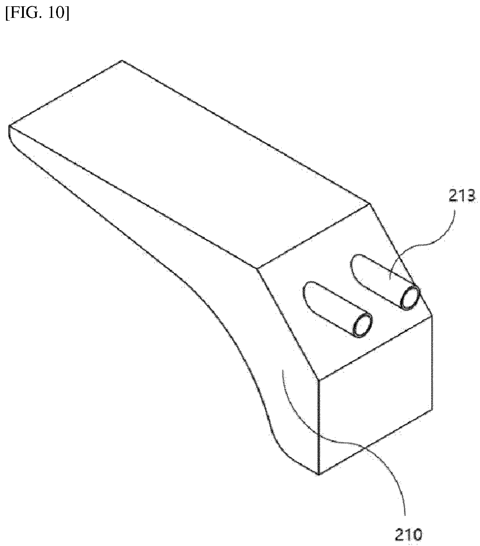

FIG. 10 is a rear perspective view of the guide member 210 according to one embodiment.

Referring to FIG. 10, a pair of fitting members 213 is coupled to the rear surface of the guide member 210. One of the two fitting members 213 is coupled to a connecting hole 216 in communication with the suction hole 211a, and the other fitting member 213 is coupled to a connecting hole 216 in communication with the jet hole 211b.

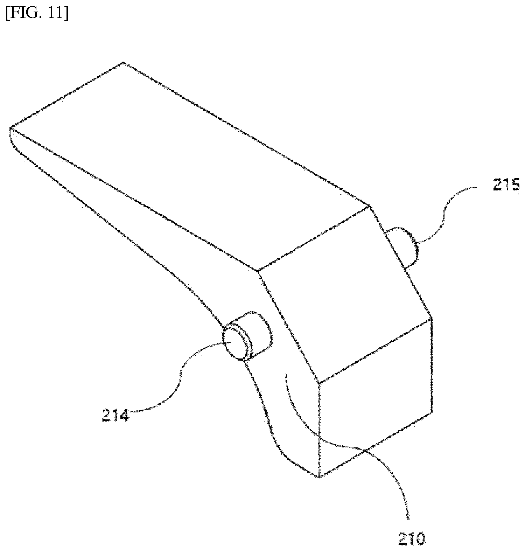

FIG. 11 is a rear perspective view of the guide member 210 according to another embodiment of the present disclosure.

Referring to FIG. 11, the guide member 210 further includes a regulating valve 214 that regulates the amount of opening in the hole 211 to regulate the amount of air moving in and out of the hole 211.

In some embodiments, the tab guide unit 200 may further include a power switch 215 to operate the pump unit 220 on the guide member 210.

In some embodiments, a regulating valve 214 is provided on a side part of the guide member 210. The guide member 210 with the regulating valve 214 may further include an opening/closing member (not shown) configured to allow regulation of the degree of opening and closing within the hole 211. The opening/closing member is operable by interlocking with the regulating valve 214 provided on an outer side of the guide member 210. Thus, the guide member 210 of the present disclosure is capable of regulating the amount of opening in the hole 211 by moving the opening/closing member by manipulating the regulating valve 214.

In some embodiments, a power switch 215 may be provided on a side part of the guide member 210. The power switch 215 is connected to a pump unit 220 connected to the corresponding guide member 210.

The power switch 215 may be provided in a button type or a rotary type, and may selectively operate any one among the suction pump 221 and the jet pump 222 connected to the guide member 210. For example, the tab guide unit 200 of the present disclosure may operate only the suction pump 221 to suck air through the guide member 210 and, conversely, may operate only the jet pump 222 to blow air through the guide member 210. Alternatively, optionally, both the suction pump 221 and the jet pump 222 can be operated simultaneously to suck air through the guide member 210 while simultaneously blowing air out.

Thus, in one embodiment of the present disclosure, the guide member 210 can operate either of the jet pump 222 and the suction pump 221 by operating the power switch 215.

In other embodiments of the present disclosure, the guide member 210 may simultaneously operate the jet pump 222 and suction pump 221 by operating the power switch 215.

The air blown or sucked through the hole 211 affects the surface of the electrode tabs T located on the guide roll 100 as shown in FIG. 2.

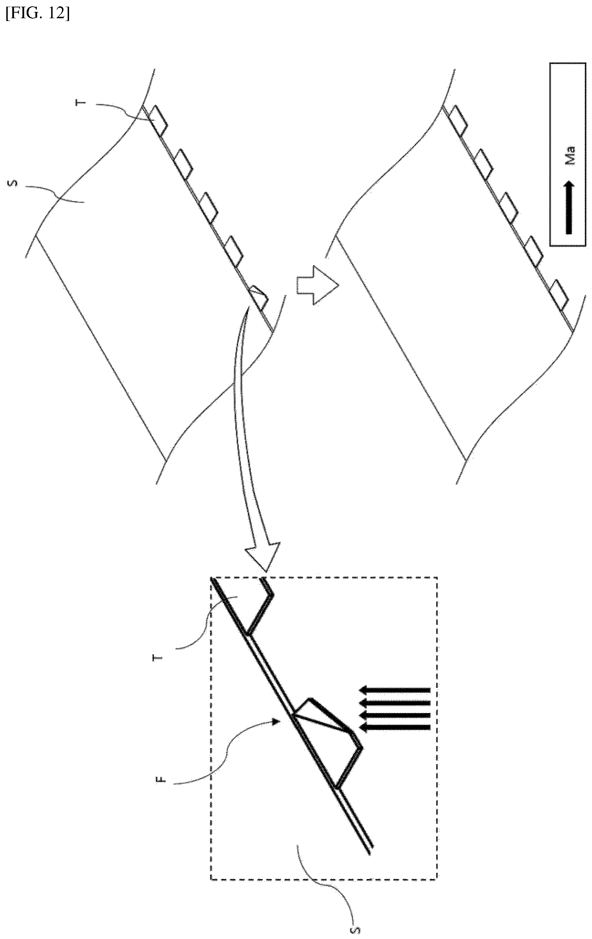

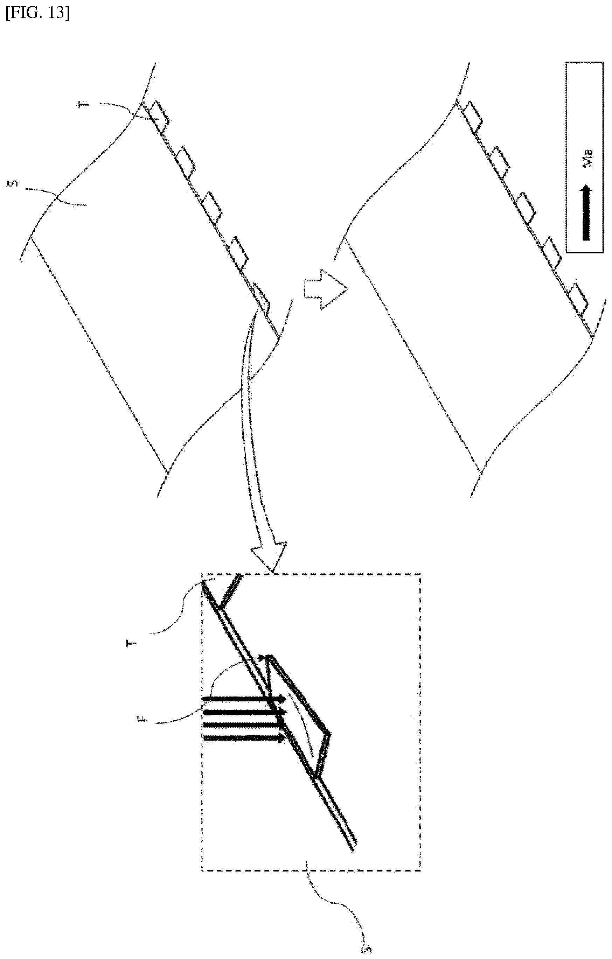

FIGS. 12 and 13 are schematic drawings illustrating the process of correcting the electrode tab T structure through the movement of air applied to the defective part F of the electrode tab T, respectively.

Specifically, FIG. 12 illustrates the process of correcting a portion of one electrode tab T that is folded downward, and FIG. 13 illustrates the process of correcting a portion of one electrode tab T that is migrated upward.

According to FIG. 12, a portion of the downwardly folded electrode tabs T is stretched by the upwardly moving air flow. Thus, the defective part F of the electrode tabs T as shown in FIG. 12 can be smoothed out or otherwise flattened to their original state by the suction force of the tab guide unit 200 provided on the upper part of the electrode sheet S.

According to FIG. 13, a portion of the electrode tab T folded upwardly is laid down by a flow of air moving downwardly. Therefore, the defective part F of the electrode tabs T as shown in FIG. 13 can be restored to be flat by the jet force of the tab guide unit 200 provided on the upper part of the electrode sheet S.

The electrode transfer system 1 of the present disclosure may include a single guide roller 100 and a single tab guide unit 200 corresponding thereto, or may include a plurality of guide rollers 100 and a plurality of tab guide units 200 corresponding to the plurality of guide rollers 100, each disposed in various zones. Thus, the tab guide unit 200 of the present disclosure can be disposed in a zone of the guide roller 100 where defects in the electrode tabs T in the electrode sheet S being transferred frequently occur, thereby reducing the incidence of defects in the electrode tabs T.

### (Second embodiment ~ Seventh embodiment)

The diameter of the suction hole 211a and the diameter of the jet hole 211b included in the guide member 210 of the present disclosure may be different.

FIG. 14 is a plan view of a guide surface Sg of a guide member 210 included in the electrode transfer system 1 of the second embodiment, wherein suction holes 211a and jet holes 211b are disposed in a mixture.

Referring to FIG. 14, suction holes 211a and jet holes 211b having different diameters are disposed as an intermix.

The arrangement of suction holes 211a and jet holes 211b as described above can provide focused suction and jet forces on a small specific zone of the electrode tab T.

According to another embodiment, the electrode transfer system 1 of the present disclosure may have the jet part 210b and the suction part 210a freely compartmentalized and located on the guide surface Sg of the guide member 210.

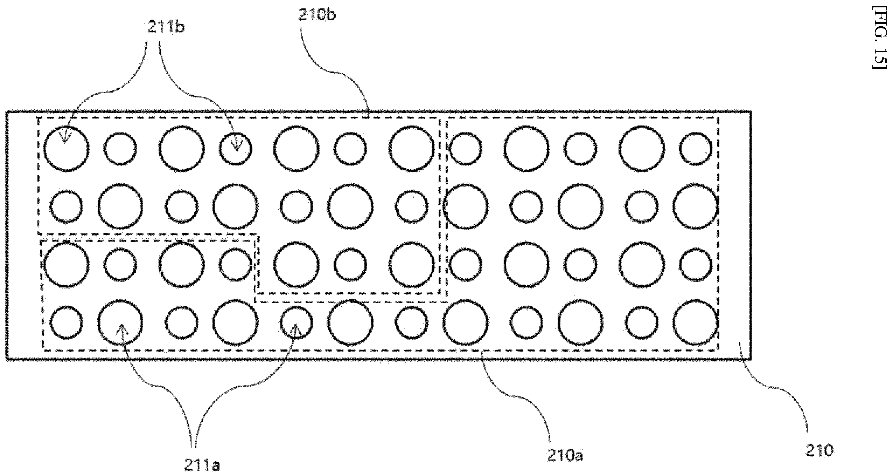

FIG. 15 is a plan view of a guide surface Sg of a guide member 210 included in the electrode transfer system 1 of the third embodiment, in which the jet part 210b and the suction part 210a are compartmentalized.

Referring to FIG. 15, there is a mixture of jet holes 211b of different diameters disposed in a particular shaped compartmentalized jet part 210b, and a mixture of suction holes 211a of different diameters disposed in a particular shaped compartmentalized suction part 210a.

The above arrangement of suction holes 211a and jet holes 211b can be optimized for electrode tabs T that are folded or migrated in a certain pattern. For example, a zone of the suction part 210a can be designed to correspond to a zone of a defective part F of the electrode tab T. Furthermore, the size of the suction holes 211a within the suction part 210a can be freely set.

In some embodiments, differently sized suction holes 211a and jet holes 211b may be closely packed and disposed in the suction part 210a and jet part 210b, respectively, and the jet part 210b and suction part 210a may be alternately disposed in a certain orientation.

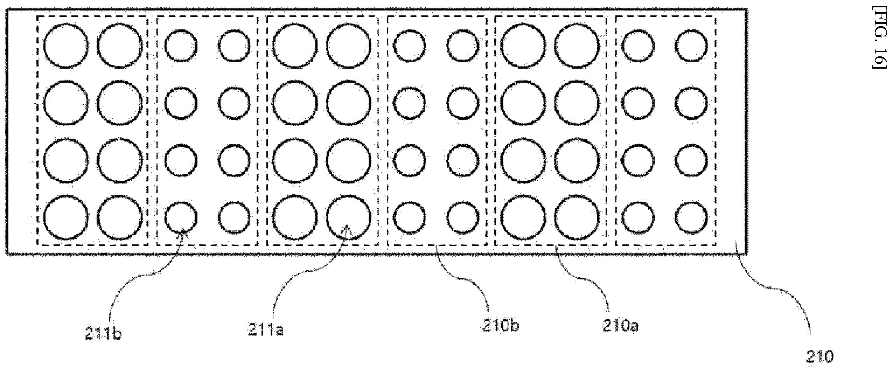

FIG. 16 is a plan view of a guide surface Sg of a guide member 210 included in the electrode transfer system 1 of the fourth embodiment, wherein the jet part 210b and the suction part 210a are alternately disposed along a longitudinal direction of the guide member 210.

Referring to FIG. 16, the suction hole 211a and the jet hole 211b have different diameters. Specifically, in the electrode transfer system 1 of the fourth embodiment, the jet holes 211b having the same diameter are closely disposed in the jet part 210b, and the suction holes 211a having the same diameter are closely disposed in the suction part 210a.

In some embodiments, the plurality of holes 211 may have a straight-line shape.

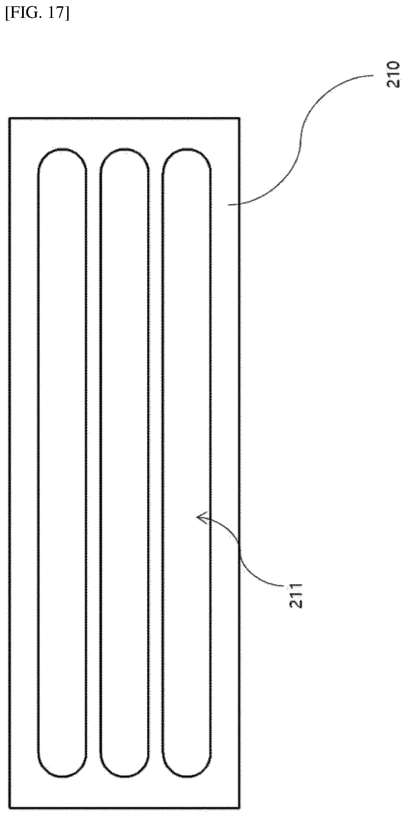

FIG. 17 is a plan view of a guide surface Sg of a guide member 210 included in the electrode transfer system 1 according to the fifth embodiment in which the plurality of holes 211 have a straight-line shape.

Referring to FIG. 17, a plurality of holes 211 having a straight-line shape is spaced apart from each other at a predetermined distance along the width direction of the guide member 210 and extend along the longitudinal direction of the guide member 210.

The plurality of holes 211 having the straight-line shape as described above may provide a continuous suction or jet force over a relatively large area.

In some embodiments, the plurality of holes 211 having the straight-line shape may be the width direction of the guide member 210.

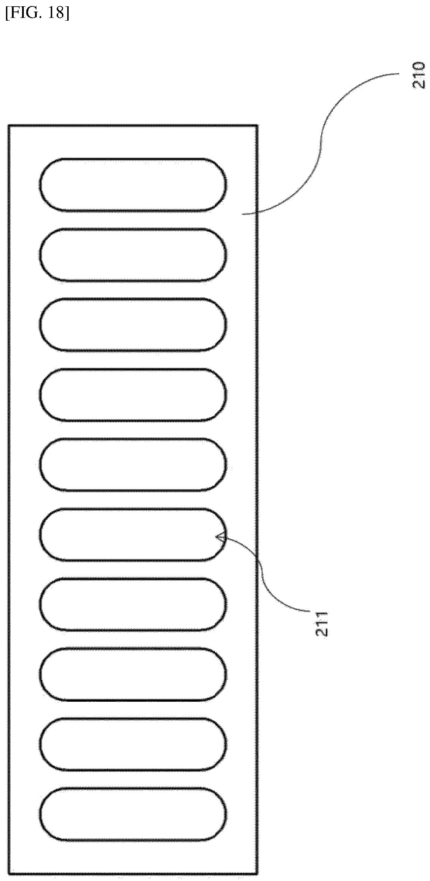

FIG. 18 is a plan view of a guide surface Sg of a guide member 210 included in the electrode transfer system 1 according to the sixth embodiment in which the plurality of holes 211 have a straight-line shape.

Referring to FIG. 18, a plurality of holes 211 having a straight-line shape is spaced apart from each other at a predetermined distance along the longitudinal direction of the guide member 210 and extend along the width direction of the guide member 210.

The plurality of holes 211 having the straight-line shape as described above may provide a continuous suction or jet force over a relatively large area.

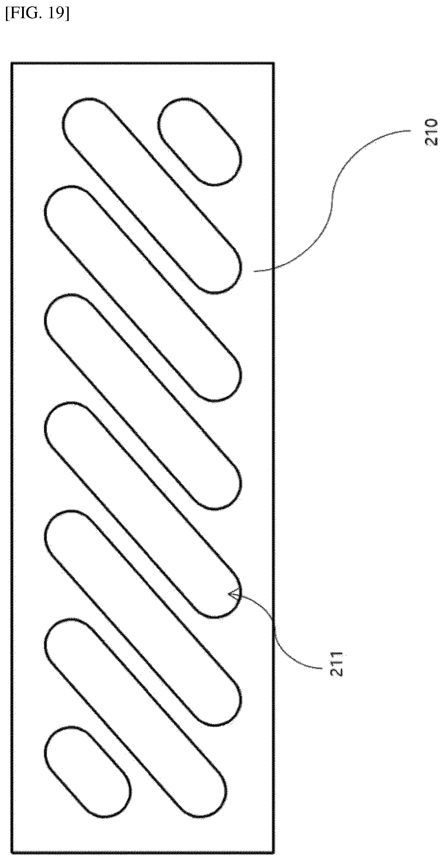

FIG. 19 is a plan view of a guide surface Sg of a guide member 210 included in the electrode transfer system 1 according to the seventh embodiment in which the plurality of holes 211 have a straight-line shape.

Referring to FIG. 19, a plurality of holes 211 having a straight-line shape is formed extending in a diagonal direction.

The plurality of holes 211 having the straight-line shape as described above may provide a continuous suction or jet force over a relatively broad area in response to the shape of the defective part F of the electrode tab T.

As described in the first embodiment to the seventh embodiment above, the tab guide unit 200 included in the electrode transfer system 1 of the present disclosure can optimize the efficiency of suction and jetting by varying the shape and arrangement of the plurality of holes 211 included in the guide member 210. That is, by optimizing the zone where the electrode tabs T are folded or migrated in a certain pattern, the efficiency of the process can be improved by varying the shape and arrangement of the plurality of holes 211.

The present disclosure has been described in more detail above with reference to the drawings and embodiments. However, it is to be understood that the configurations shown in the drawings or embodiments described herein are only one embodiment of the invention and do not represent all of the technical ideas of the invention, and that there may be various equivalents and modifications that may be substituted for them at the time of filing the present application.

### [Description of Reference Numerals]

1: ELECTRODE TRANSFER SYSTEM
100: GUIDE ROLLER
110: ROTATION AXIS
120: ROLLER SUPPORT
200: TAB GUIDE UNIT
210: GUIDE MEMBER
210a: SUCTION PART
210b: JET PART
211: HOLE
211a: SUCTION HOLE
211b: JET HOLE
212: AIR PASSAGE
213: FITTING MEMBER
214: REGULATING VALVE
215: POWER SWITCH
216: CONNECTING HOLE
220: PUMP UNIT
221: SUCTION PUMP
222: JET PUMP
230: PIPE
240: CONNECTION SUPPORT
S: ELECTRODE SHEET
T: ELECTRODE TAB
F: DEFECTIVE PART
Ma: AIR MOVEMENT
Ms: ELECTRODE SHEET MOVEMENT
Sg: GUIDE SURFACE

## Claims

1. An electrode transfer system for transferring electrode sheets that include electrode tabs formed at predetermined spacings on one side, comprising:
a guide roller configured to rotate along a transfer direction of the electrode sheet and supporting the electrode sheet; and
a tab guide unit configured to blow air or suck air toward opposing electrode sheets on the guide roller, wherein
the tab guide unit comprises:
a guide member including at least one hole formed to allow air to flow in and out, and extending along a curved surface of the guide roller; and
a pump unit connected to the hole to be in communication and to provide a suction force and a jet force to the guide member.

2. The electrode transfer system of claim 1, wherein
the pump unit comprises:
a jet pump for blowing air; and
a suction pump for sucking in air, wherein
the hole communicating with the jet pump is configured to blow air toward the electrode sheet, and the hole communicating with the suction pump is configured to suck air toward the electrode sheet.

3. The electrode transfer system of claim 1, wherein
the tab guide unit is further provided with a power switch to operate the pump unit on the guide member.

4. The electrode transfer system of claim 2, wherein
the hole comprises:
a jet hole in communication with the jet pump; and
a suction hole in communication with the suction pump.

5. The electrode transfer system of claim 4, wherein
a diameter of the suction hole and a diameter of the jet hole are different.

6. The electrode transfer system of claim 4, wherein
a diameter of the suction hole is substantially the same as a diameter of the jet hole.

7. The electrode transfer system of claim 4, wherein
the guide member includes a guide surface opposed to the guide roller, wherein the hole is formed in the guide surface.

8. The electrode transfer system of claim 7, wherein
the jet hole and the suction hole are intermixed and disposed on the guide surface.

9. The electrode transfer system of claim 7, wherein
the guide surface includes a jet part having at least one jet hole that is closely concentrated and a suction part having at least one suction hole that is closely concentrated, wherein
the jet part and the suction part are alternately located along a longitudinal or width direction of the guide member.

10. The electrode transfer system of claim 7, wherein
the guide surface includes an arc part corresponding to a curved surface of the guide roller.

11. The electrode transfer system of claim 1, wherein
the hole has any shape among a point and a straight line.

12. The electrode transfer system of claim 11, wherein
in the hole having a shape of the straight line,
the hole extends along a longitudinal or width direction of the guide member.

13. The electrode transfer system of claim 1, wherein
the guide member is rotatable about a rotation axis of the guide roller in an arc along a curved surface of the guide roller.

14. The electrode transfer system of claim 1, wherein
the guide member is disposed in a position corresponding to the electrode tab of the electrode sheet supported on the guide roller.

15. The electrode transfer system of claim 1, wherein
the guide member further includes a regulating valve for regulating an amount of opening in the hole to regulate an amount of the air flowing in and out of the hole.
